# EUROPEAN PATENT APPLICATION

(11) **EP 1 650 283 A1**
(43) Date of publication of application: **26.04.2006**
(21) Application number: 04745638.9
(22) Date of filing: 07.06.2004
(51) Int. Cl.: C09K 11/08, C09K 11/56, H01J 9/227

(54) **PHOSPHOR AND METHOD AND APPARATUS FOR PRODUCING PHOSPHOR**

(30) Priority: 11.06.2003 JP 2003166971
(71) Applicant: KABUSHIKI KAISHA TOSHIBA, Tokyo 105-8001 (JP)
(72) Inventor: YOKOSAWA, Nobuyuki, Tokyo 1058001 (JP); YAMAGUCHI, Kenichi, Tokyo 1058001 (JP); ITO, Takeo, Tokyo 1058001 (JP)
(74) Representative: HOFFMANN EITLE
(86) International application number: PCT/JP2004/007928
(87) International publication number: WO 2004/111154

(57) **Abstract**

A method for producing a phosphor comprises a burning step to burn a phosphor material containing elements constituting a host material of the phosphor and an activator or compounds containing the elements by heating. In the burning step, the phosphor material is continuously passed through a rotating tubular heating furnace disposed in a tilting manner with respect to a horizon to be heated and burned in the heating furnace, and the burned material continuously discharged from the heating furnace is cooled down rapidly. Spherical phosphor particles which are uniform in a particle diameter and shape thereof and exhibit high dispersibility can be produced at low cost and in good yield.

## Description

### Technical Field

The present invention relates to a phosphor and a method and an apparatus for producing a phosphor. More specifically, the present invention relates to a method for producing a phosphor that is excited by an electron beam and emits light, the phosphor obtained by the production method, and an apparatus for producing the phosphor.

### Background Art

An image display device such as a cathode-ray tube (CRT), a field-emission display (FED) or a plasma display panel (PDP) has a phosphor film containing phosphors emitting blue light, green light, and red light, respectively, to realize a full-color display.

Conventionally, in order to produce these phosphors of respective colors, a phosphor material including a host material of the phosphor, an element constituting an activator or the like is filled in a crucible made of quartz or alumina and heated at a predetermined temperature to be burned. The phosphor obtained in this manner is subject to a dispersion process and further a surface treatment, and is mounted into a light-emitting device such as the aforementioned display devices. Then, the phosphor emits light under various excitation conditions to be an optical output of the device.

However, in the above-described burning method, it is difficult to obtain even heat conduction through the phosphor material, so that the material is required to be heated and burned for a long time. Further, the phosphor particles thus obtained have a broad particle-diameter distribution and, besides, the particles are easily caused to be aggregated.

Furthermore, since the shapes of the particles frequently have irregular shapes being close to polyhedrons by the cause of their crystal structures, it is difficult to obtain the particles which are uniform in their shape. Backed by this, a phosphor film formed by coating the obtained phosphor ends in a heterogeneous one with a low bulk density, exhibiting lower light emission characteristics.

In other words, since the phosphor particles have other than a spherical shape and exhibit abroadparticle-diameter distribution, a dense phosphor film cannot be obtained, so that air gaps are generated and smoothness of a metal back film being a light reflection film is degraded to cause a light loss. Further, a diffuse reflection of the phosphor film increases, where an ultraviolet for exposure does not enter into inside the phosphor film, and the inside thereof is difficult to be polymerized, so that the phosphor film having enough thickness is difficult to be formed.

From such a viewpoint, methods in which the bulk density of a phosphor screen is improved by letting the phosphor particles have a shape being close to a sphere as much as possible are proposed (refer to, for example, Patent Document 1, Patent Document 2 and Patent Document 3).

However, these methods are to produce specific phosphor(s) or otherwise to cause a large cost increase, in which the usages of the obtained phosphors are limited.

Further, a method for producing the phosphor having a small and uniform particle diameter and intended for the PDP is proposed, in which an annealing is performed while rolling the phosphor in a rotating heat-resistant container in an annealing process after a grinding process, (refer to, for example, Patent Document 4).

Furthermore, a method for producing a photostimulable phosphor of fine particles having a constant particle diameter distribution is proposed, in which powders being a phosphor precursor are inputted into a rotary kiln of a batch system to be burned by being given vibration and/or migration (refer to, for example, Patent Document 5).

However, in the method described in Patent Document 4, the aggregated phosphor particles caused in the annealing process is required to be dispersed again by the grinding, leaving a problem of increasing the processes in number.

Further, in the production of a zinc sulfide phosphor, when gradual cooling is performed under an oxygen-free environment, coarse particles are grown in that the burned material receives a thermal energy over a predetermined range, so that the burning process requires a process of rapid heating and rapid cooling. However, when the burning method based on the batch system using the rotary kiln described in Patent Document 5 employed to produce the zinc sulfide phosphor, the heating and cooling are forced to be performed gradually. Accordingly, in that method, the sulfur is induced to be separated or oxidized, so that a defect in sulfur and/or a surface oxidization are/is tend to be caused. Consequently, even when a physical motion such as the vibration or flow is added in the course of the burning, the zinc sulfide phosphor cannot be produced.

As described above, in the prior arts, there are problems that the types of the phosphors are limited or the cost increases, so that the spherical phosphor particles having a uniform particle diameter and shape cannot be obtained at low cost.
Patent Document 1: Japanese Patent Laid-Open Application No. Hei 08-109375 (pages 2 to 3)
Patent Document 2: Japanese Patent Laid-Open Application No. Hei 09-310067 (page 2)
Patent Document 3: Japanese Patent Laid-Open Application No. 2000-154382 (page 2)
Patent Document 4: Japanese Patent Laid-Open Application No. 2003-034789 (page 2, page 7)
Patent Document 5: Japanese Patent Laid-Open Application No. 2002-309246 (page 7)

### Disclosure of the Invention

The present invention has been made to bring a solution to such problems, and an object thereof is to provide spherical phosphor particles which are uniform in particle diameter and shape thereof and exhibiting high dispersibility in good yield and at low cost.

A method for producing a phosphor according to the present invention comprises burning a phosphor material containing elements constituting a host material of the phosphor and an activator or compounds containing the elements by heating, wherein, in the burning, the phosphor material is continuously passed through a rotating tubular heating furnace disposed in a tilting manner with respect to a horizon to be heated and burned in the heating furnace, and the burned material continuously discharged from the heating furnace is cooled down.

Further, an apparatus for producing a phosphor according to the present invention comprises a burning apparatus burning a phosphor material containing elements constituting a host material of the phosphor and an activator or compounds containing the elements by heating, wherein the burning apparatus is disposed in a tiltingmanner with respect to a horizon and have a tubular heating furnace rotating around a center axis, a mechanism to continuously feed the phosphor material from an upper end portion of the heating furnace, a mechanism to continuously discharge the burned material from a lower end portion of the heating furnace, and a cooling section to cool down the burned material continuously discharged from the heating furnace.

Further, a phosphor according to the present invention is characterized in that the phosphor is obtained by the above-described method for producing a phosphor.

According to the present invention, phosphor particles having a uniform particle diameter and shape and exhibiting high dispersibility can be obtained in good yield and at low cost. Further, with the use of the thus produced phosphor, a phosphor film exhibiting ahighbulk density of particles and superior luminous characteristics can be produced, so that a display device superior in display characteristics can be obtained.

### Brief Description of Drawings

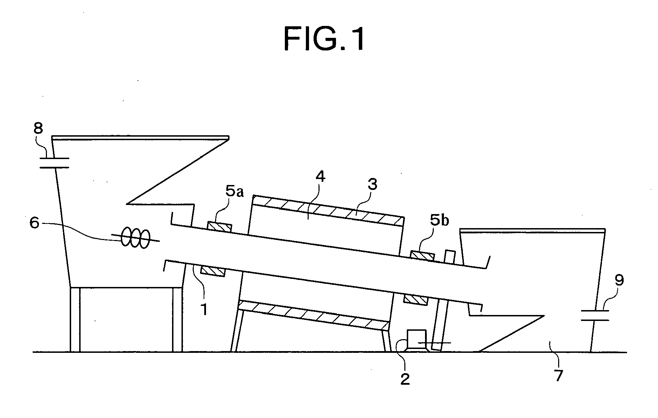

FIG. 1 is a view schematically showing a configuration of a burning apparatus in an apparatus for producing a phosphor being an embodiment of the present invention.

### Best Mode for Implementing the Invention

Hereinafter, embodiments according to the present invention will be described. Note that the present invention is not limited to the embodiments described below.

A first embodiment according to the present invention is a method for producing a phosphor of a color display device such as a CRT and FED, and comprises a burning step to burn a phosphor material by heating, the phosphor material containing a element constituting a host material of the phosphor or a compound containing the element and a element constituting an activator or a compound containing the element.

In the burning step, the phosphor material described above is continuously passed through a rotating tubular heating furnace disposed in a tilting manner with respect to the horizontal direction. The phosphor material is rapidly heated up to a predetermined temperature for the burning in the heating furnace and moved from the upward to the downward in the furnace while rolled in accordance with the rotation of the heating furnace. Inthismanner, the phosphor material is heated for a necessary and sufficient time to be burned. After that, the obtained burned material is continuously discharged from the heating furnace to be cooled down rapidly.

In the embodiment as described above, preferably, an inside of the tubular heating furnace and a cooling section for the burned material discharged from the heating furnace are kept in an oxygen-free state in which oxygen is removed. Preferably, the phosphor material is burned by being heated in the oxygen-free atmosphere and cooled down still in the oxygen-free state. Further, the rotational speed of the heating furnace is, preferably, 0.5 to 50 rotations/minute. In the case of the rotational speed of over 50 rotations/minute, it is difficult to control a required burning time, being unfavorable.

Especially, when burning a phosphor of a zinc sulfide (ZnS) group such as of ZnS: Ag, Al or ZnS: Cu, Al, the inside of the heating furnace is preferably kept in an inert-gas atmosphere such as of argon, nitrogen or the like, a reducing-gas atmosphere containing hydrogen, or a hydrogen sulfide atmosphere.

Furthermore, the tilt angle of the heating furnace with respect to the horizon is preferably adjusted in accordance with the length and/or rotational speed of the heating furnace so that the phosphor material can stay in the furnace for not more than a necessary and sufficient time to be burned.

According to the first embodiment of the present invention, the phosphor material is continuously passed through the tubular heating furnace disposed in a tilting manner with respect to the horizon and rotating around an axis. In the course of moving in the heating furnace, the phosphor material is rapidly heated up while rolling, so that the phosphor material is given an even heat energy in the oxygen-free state as well as in the inert-gas, reducing gas, or otherwise hydrogen sulfide atmosphere. As a result, the burning is completed in a shorter time as compared to a conventional burning method using a crucible.

Further, the phosphor particles are prevented from aggregating, so that an additional grinding is not required after the burning. Accordingly, the phosphor can be prevented from degrading due to the repetitive grinding processes, and therefore, an additional process such as a reannealing is not required, and the number of processes can be reduced. Moreover, the phosphor material is burned by being heated while rolling in the heating furnace, so that the phosphor particles having substantially a spherical shape of a uniform particle diameter can be obtained. Note that a ratio of a major axis to a minor axis of each phosphor particle obtained can be set, for example, to range from 1.0 to 1.5.

Next, the description will be given of an embodiment of an apparatus for producing a phosphor. A second embodiment of the present invention comprises a burning apparatus shown in FIG. 1.

In FIG. 1, a numerical reference 1 denotes a circular and tubular heat-resistant container made of quartz or alumina. The heat-resistant container 1 is disposed in a tilting manner with respect to the horizon and configured to rotate around the center axis driven by a rotation driving mechanism 2 such as a motor.

The tilt angle of the heat-resistant container 1 with respect to the horizon is adjustable in accordance with the length of a heating section and/or the rotational speed so that the phosphor material can stay in the later-described heating section for not more than the necessary and sufficient time to be burned.

In most parts of an outer periphery of the heat-resistant container 1 from the upper end thereof, a heating element 3 such as molybdenum silicide is provided, and thus a heating section 4 is configured. The upper and lower portions of the heat-resistant container 1 not surrounded by the heating element 3 are cooling sections 5a, 5b to cool down the burned material. The cooling is performed based on mainly water cooling.

At the upper end portion of the heat-resistant container 1, a feeding mechanism (feeder) 6 is provided to continuously feed the phosphor material to be heated and burned, and at the lower end portion of the heat-resistant container 1, which is the cooling section 5b, a burned material collector 7 continuously receiving the burned material is provided.

Further, a gas introducing port 8 for introducing the inert gas or the like is mounted at the feeding mechanism 6, and the inert gas or the like is fed from the gas introducing port 8 to flow in the heat-resistant container 1 together with the burned material. The gas is then discharged from a gas leading out port 9 mounted at the burned material collector 7, so that the inside of the burning apparatus is configured to be placed in the oxygen-free state and in the inert-gas atmosphere. Further, the burned material is cooled down completely in the cooling section 5b.

In the thus-configured burning apparatus, the phosphor for example of the zinc sulfide (ZnS) group is burned as described below.

Specifically, the phosphor material including the zinc sulfide (ZnS) being the host material of the phosphor and the element constituting a activator or the compound containing the element is continuously fed by the feeding mechanism (feeder) 6 from the upper end portion of the heat-resistant container 1. In the heat-resistant container 1, the inert gas, the reducing gas, or the hydrogen sulfide gas is introduced, and the heating section 4 and the cooling sections 5a, 5b are kept in the oxygen-free state and in an inert-gas or reducing-gas atmosphere. The phosphor material is rapidly heated in the heating section 4 by the heating element 3 up to a predetermined temperature (for example, 950°C to 1200°C) to move at a speed in accordance with the tilt angle of the heat-resistant container 1 while rolling in the heating section 4. The phosphor material continuously moves in the heating section 4 by taking 5 minutes to 60 minutes, and after being burned by being heated sufficiently, the burned material is entered into the cooling section 5b to be cooled down rapidly in the oxygen-free state as well as in the inert-gas or reducing gas atmosphere while moving in the cooling section 5b. The cooled burned material is continuously discharged from the lower end portion of the heat-resistant container 1.

According to the thus-configured production apparatus of the second embodiment, the heating and burning of the phosphor material can be performed in a short period of time, and the phosphor particles having substantially a spherical shape of a uniform particle diameter can be obtained in good yield.

Next, specific examples of the present invention will be described.

### Example 1 (Production of ZnS: Ag, Al)

To a ZnS material being the host material of the phosphor, predetermined amounts of materials (for Ag, silver nitrate and so forth; for Al, aluminum nitrate and so forth) for the activator were added and further, a flux such as potassium chloride or magnesium chloride was added if necessary, and these were wet mixed. The slurry thus obtained was transferred into a dry container and dried with a drier, and the phosphor material was obtained.

Subsequently, the phosphor material was inputted into the heat-resistant container of the burning apparatus shown in FIG. 1 together with appropriate amounts of sulfur and activated carbon. Note that the heat-resistant container was made of quartz or alumina and had an inside diameter of 60 mm and a length of 1000 mm. Further, its rotational speed was 0.5 rotation/minute to 10 rotations/minute and its tilt angle was 1° to 5°.

Then, the inputted phosphor material was continuously passed through inside the heating section, which was kept in the oxygen-free state as well as in the inert-gas or reducing-gas atmosphere (atmosphere of nitrogen containing 3% to 5% of hydrogen) by taking 15 to 45 minutes to be heated at a temperature of 950 °C, and after that, the burned material was rapidly cooled down in the cooling section.

Next, the obtained burned material was washed with ion-exchange water or the like, and after that a sieving or the like was performed to remove coarse particles if necessary, so that the zinc sulfide phosphor activated with silver and aluminum (ZnS: Ag, Al) was obtained.

Subsequently, using the obtained phosphor, the phosphor film was formed by slurry method. The formation of the phosphor film was performed by coating a slurry on a glass substrate with a spinning coater, the slurry being prepared by dispersing the phosphor in a water solution containing polyvinyl alcohol or the like. With an adjustment of the spinning speed of the spinning coater and viscosity of the slurry, the thickness of the phosphor film was set to be 3 × 10⁻³ mg/mm³.

As to the obtained phosphor film, luminance and luminous chromaticity were measured, respectively. The luminance was measured by emitting an electron beam of an acceleration voltage of 10 kV and a current density of 2 × 10⁻⁵ A/mm². Then, the resulting luminance of the phosphor film was obtained as a relative value to the luminance of a later-described comparison example 1 being defined as 100 %.

The luminous chromaticity was measured using a SR-3 manufactured by Topcon Corporation as a chromaticity measurement apparatus. The measurement of the luminous chromaticity was conducted in a dark room where the chromaticity was not affected by external factors. The luminance of the zinc sulfide phosphor (ZnS: Ag, Al) obtained in Example 1 was 101 % and the luminous chromaticity thereof was (0.151, 0.059), respectively, indicating favorable luminous characteristics similar to those of abluephosphor in Comparative Example 1.

### Example 2 (production of ZnS: Cu, Al)

To a ZnS material being the host material of the phosphor, predetermined amounts of materials of the activator (for Cu, copper sulfate; and for Al, aluminum nitrate) were added, respectively; and, as in Example 1, the phosphor material obtained by wet mixing was continuously passed through inside the heating section of the burning apparatus shown in FIG. 1 by taking 15 minutes to 45 minutes to be burned by being heated at an temperature of 950°C.

Next, using the obtained zinc sulfide phosphor activated with copper and aluminum (ZnS: Cu, Al), the phosphor film was formed by the slurry method and the luminance and luminous chromaticity of the phosphor film were examined in the same manner as in Example 1.

The luminance was 100 % as a relative value to the luminance in later-described Comparative Example 2 being defined as 100 %. Meanwhile, the luminous chromaticity was (0.281, 0.621), indicating the favorable luminous characteristics similar to those of a green phosphor in Comparison example 2.

### Comparison Example 1

To a ZnS material being the host material of the phosphor, predetermined amounts of materials (silver nitrate and aluminum nitrate) of the activator were added, respectively, and further the flux such as potassium chloride or magnesium chloride was added if necessary; and these were wet mixed. The obtained slurry was transferred into the dry container and dried with the drier, so that the phosphor material was obtained.

Subsequently, this phosphor material was filled in the crucible made of quartz together with appropriate amounts of sulfur and activated carbon, and heated in the hydrogen sulfide atmosphere or reducing gas atmosphere (atmosphere of nitrogen containing 3 % to 5 % of hydrogen) as well as at a temperature of 950°C for 60 to 120 minutes to be burned. After the burning, the crucible was left at a room temperature to be cooled down naturally in the nitride atmosphere.

Next, the obtained burned material was washed with the ion-exchange water or the like and dried, and after that, if necessary, the sieving was performed to remove coarse particles, so that the zinc sulfide phosphor activated with silver and aluminum (ZnS: Ag, Al) was obtained.

Subsequently, using the obtained phosphor, the phosphor film was formed by the slurry method, and the luminance and luminous chromaticity of the phosphor film were examined in the same manner as in Example 1. Note that the luminance at this phosphor film was defined as 100 %. The luminous chromaticity was (0.150, 0.06).

### Comparative Example 2

To a ZnS material being the host material of the phosphor, predetermined amounts of materials (copper sulfate and aluminum nitrate) of the activator were added, respectively, and further, the flux such as potassium chloride or magnesium chloride was added if necessary; and these were wet mixed. The obtained slurry was transferred into the dry container and dried with the drier, so that the phosphor material was obtained.

Subsequently, this phosphor material was filled in the crucible made of quartz together with appropriate amounts of the sulfur and activated carbon, and heated in the hydrogen sulfide atmosphere or reducing atmosphere (atmosphere of nitrogen containing 3 % to 5 % of hydrogen) as well as at a temperature of 950°C for 60 to 120 minutes to be burned. After the burning, the crucible was left at a room temperature to be cooled down naturally in the nitride atmosphere.

Next, the obtained burned material was washed with the ion-exchange water or the like and dried, and after that, if necessary, the sieving was performed to remove coarse particles, so that the zinc sulfide phosphor activated with copper and aluminum (ZnS: Cu, Al) was obtained.

Subsequently, using the obtained phosphor, the phosphor film was formed by the slurry method, and the luminance and luminous chromaticity of the phosphor film are examined in the same manner as in Example 1. Note that the luminance at this phosphor film was defined as 100 %. The luminous chromaticity was (0.282, 0.620).

### Industrial Applicability

As has been described in the above, according to the present invention, phosphor particles which are uniform in particle diameter and shape thereof and exhibit high dispersibility can be obtained in good yield and at low cost. Further, with the use of the thus produced phosphor, the phosphor film with high bulk density of particles and superior luminous characteristics can be obtained, so that a display device having superior display characteristics can be obtained.

## Claims

1. A method for producing a phosphor comprising burning a phosphor material containing elements constituting a host material of the phosphor and an activator or compounds containing the elements by heating,
wherein, in the burning, the phosphor material is continuously passed through a rotating tubular heating furnace disposed in a tilting manner with respect to a horizon to be heated and burned in the heating furnace, and the burned material continuously discharged from the heating furnace is cooled down.

2. The method for producing a phosphor as set forth in claim 1, wherein an inside of the heating furnace is kept to be in an oxygen-free state.

3. The method for producing a phosphor as set forth in claim 1, wherein an inside of the heating furnace is kept to be in an inert-gas atmosphere or in a reducing gas atmosphere.

4. The method for producing a phosphor as set forth in claim 1, wherein a tilt angle of the heating furnace is adjusted so that thephosphormaterial is stayed in the heating furnace for a sufficient time to be burned while moving in the heating furnace.

5. The method for producing a phosphor as set forth in claim 1, wherein a rotational speed of the heating furnace is 0.5 to 50 rotations/minute.

6. An apparatus for producing a phosphor comprising a burning apparatus burning a phosphor material containing elements constituting a host material of the phosphor and an activator or compounds containing the elements by heating,
wherein the burning apparatus is disposed in a tilting manner with respect to a horizon and have a tubular heating furnace rotating around a center axis, a mechanism to continuously feed the phosphor material from an upper end portion of the heating furnace, a mechanism to continuously discharge the burned material from a lower end portion of the heating furnace, and a cooling section to cool down the burned material continuously discharged from the heating furnace.

7. The apparatus for producing a phosphor as set forth in claim 6, wherein the heating furnace has a tubular heat-resistant container made of quartz or alumina.

8. The apparatus for producing the phosphor as set forth in claim 6,
wherein the heating furnace has an introducing mechanism of an inert gas or reducing gas and a discharging mechanism of the inert gas or reducing gas, respectively.

9. A phosphor produced by the method for producing a phosphor as set forth in claim 1.

10. Thephosphoras set forthinclaim9, comprisingparticles of which each ratio of a major axis to a minor axis ranges from 1.0 to 1.5.
